# EUROPEAN PATENT APPLICATION

(11) **EP 4 757 047 A1**
(43) Date of publication of application: **10.06.2026**
(21) Application number: 24847906.5
(22) Date of filing: 29.06.2024
(51) Int. Cl.: H01M 50/533

(54) **ELECTRODE SHEET, ELECTRODE CORE, BATTERY AND ELECTRIC DEVICE**

(30) Priority: 28.07.2023 CN 202322026157 U
(71) Applicant: BYD Company Limited, Shenzhen, Guangdong 518118 (CN)
(72) Inventor: LIANG, Liwei, Shenzhen, Guangdong 518118 (CN); MA, Chenchong, Shenzhen, Guangdong 518118 (CN); CAI, Chengyan, Shenzhen, Guangdong 518118 (CN); HU, Shumin, Shenzhen, Guangdong 518118 (CN); OUYANG, Jinzhong, Shenzhen, Guangdong 518118 (CN)
(74) Representative: Mathys & Squire
(86) International application number: PCT/CN2024/102754
(87) International publication number: WO 2025/025945

(57) **Abstract**

Provided are an electrode plate, an electrode core, a battery, and an electric apparatus. The electrode plate includes a foil and a second tab. The foil includes a foil body and a first tab connected to each other. The first tab protrudes beyond a side edge of the foil body in a first direction. The foil body includes a first end portion and a second end portion that are disposed opposite to each other in a second direction. The first tab and the first end portion are spaced apart by a preset distance. A dressing layer is provided on at least one surface of the foil body in a thickness direction of the electrode plate. The second tab is disposed between the first end portion and the first tab and is electrically connected to the foil body. The second tab and the first tab protrude beyond a same side edge of the foil body.

## Description

This application claims priority to Chinese Patent Application No. 202322026157.9, filed with the China National Intellectual Property Administration on July 28, 2023 and entitled "ELECTRODE PLATE, ELECTRODE CORE, BATTERY, AND ELECTRIC APPARATUS", which is incorporated herein by reference in its entirety.

### TECHNICAL FIELD

This application relates to the field of battery technologies, and in particular, to an electrode plate, an electrode core, a battery, and an electric apparatus.

### BACKGROUND

Currently, in the field of battery technologies, a tab can be molded by using a die-cut foil body. When an electrode core is wound, if the die-cut tab is disposed at an end portion of an electrode plate that is close to or far away from a central hole of the electrode core, the tab is prone to wrinkling when folded, causing a corner formed by connection between the tab and a body to protrude. To avoid wrinkling of the electrode plate when folded, the tab is spaced apart from at least one end of the body.

During electrochemical reaction between the electrode core and an electrolytic solution that is in an accommodating cavity, electrons need to be transmitted from the tab to a region between the tab and an end of the body that is spaced apart from the tab. However, a transmission path of the electrons involved in this transmission manner is relatively long, affecting charging/discharging performance of a battery.

### SUMMARY

A technical problem to be resolved in embodiments of the present disclosure is to provide an electrode plate, an electrode core, a battery, and an electric apparatus that can reduce a probability of battery polarization and a risk of lithium precipitation.

According to a first aspect, the present disclosure provides an electrode plate. The electrode plate includes:
a foil, wherein the foil includes a foil body and a first tab connected to each other, and the first tab protrudes beyond a side edge of the foil body in a first direction; the foil body includes a first end portion and a second end portion that are disposed opposite to each other in a second direction; the first tab and the first end portion are spaced apart by a preset distance; and a dressing layer is provided on at least one surface of the foil body in a thickness direction of the electrode plate; and
a second tab, wherein the second tab is disposed between the first end portion and the first tab and is electrically connected to the foil body, and the second tab and the first tab protrude beyond a same side edge of the foil body.

With reference to the first aspect, in a possible implementation, a thickness of the first tab is W1, a thickness of the second tab is W2, 1 ≤ W2/W1 ≤ 15, and W1 and W2 have a same unit.

With reference to the first aspect, in a possible implementation, the foil body includes a first surface and a second surface that are disposed opposite to each other in the thickness direction; and the dressing layer includes a first dressing layer and a second dressing layer, the first dressing layer being disposed on the first surface, and the second dressing layer being disposed on the second surface.

With reference to the first aspect, in a possible implementation, a first notch is provided in the first dressing layer, and the first notch is in communication with the first surface; and
a connection end of the second tab extends into the first notch and is electrically connected to the first surface, and a free end of the second tab protrudes beyond the first dressing layer.

With reference to the first aspect, in a possible implementation, a second notch in communication with the second surface is provided at a position of the second dressing layer opposite to the first notch.

With reference to the first aspect, in a possible implementation, an orthographic projection of a portion of the second tab that extends into the first notch on the foil body is located within an orthographic projection of the first notch on the foil body.

With reference to the first aspect, in a possible implementation, the foil body has a first empty foil region, the first empty foil region is connected to a region covered by the dressing layer in the foil body and extends to the first end portion, and the second tab is connected to the first empty foil region.

With reference to the first aspect, in a possible implementation, the second tab and the foil body are of an integrated structure.

With reference to the first aspect, in a possible implementation, the foil includes a plurality of first tabs, and the plurality of first tabs are arranged at intervals in the second direction.

With reference to the first aspect, in a possible implementation, in the first direction, a size of the second tab protruding beyond the foil body is smaller than a size of the first tab protruding beyond the foil body, and the first direction is perpendicular to the second direction.

With reference to the first aspect, in a possible implementation, the foil body further has a second empty foil region, the second empty foil region is located on a side of the foil body that is connected to the first tab and the second tab, and is connected to a region covered by the dressing layer in the foil body, and the second empty foil region extends from the first end portion to the second end portion.

With reference to the first aspect, in a possible implementation, a size of the second empty foil region in the first direction is 2 mm to 6 mm.

With reference to the first aspect, in a possible implementation, the electrode plate is embodied as at least one of a positive electrode plate and a negative electrode plate of a battery.

According to a second aspect, the present disclosure provides an electrode core. The electrode core includes:
a positive electrode plate and a negative electrode plate, wherein at least one of the positive electrode plate and the negative electrode plate is the wound electrode plate according to the first aspect.

With reference to the second aspect, in a possible implementation, both the first tab and the second tab are disposed in a bent manner; and a joint between the second tab and the foil body is closer to an axial line of the electrode core than a joint between the first tab and the foil body; and
a free end of the first tab bends and extends toward a direction close to the axial line of the electrode core, and the second tab bends and extends toward a direction close to or away from the axial line of the electrode core.

With reference to the second aspect, in a possible implementation, the foil includes a plurality of first tabs, the free end of the first tab bends and extends toward the direction close to the axial line of the electrode core, and a minimum distance from a joint between a first tab closest to the axial line of the electrode core in the plurality of first tabs and the foil body to the axial line of the electrode core is 4 mm to 9 mm; and the second tab bends and extends toward the direction close to the axial line of the electrode core, and a minimum distance from a joint between the second tab and the foil body to the axial line of the electrode core is 3 mm to 6 mm.

With reference to the second aspect, in a possible implementation, both the first tab and the second tab are disposed in a bent manner; and a joint between the first tab and the foil body is closer to an axial line of the electrode core than a joint between the second tab and the foil body; and
a free end of the first tab bends and extends toward a direction away from the axial line of the electrode core, and the second tab bends and extends toward a direction close to or away from the axial line of the electrode core.

With reference to the second aspect, in a possible implementation, the foil includes a plurality of first tabs, the free end of the first tab bends and extends toward the direction away from the axial line of the electrode core, and a maximum distance from a joint between a first tab farthest away from the axial line of the electrode core in the plurality of first tabs and the foil body to the axial line of the electrode core is 37 mm to 42 mm; and
the second tab bends and extends toward the direction away from the axial line of the electrode core, and a maximum distance from a joint between the second tab and the foil body to the axial line of the electrode core is 41 mm to 44 mm.

According to a third aspect, the present disclosure provides a battery. The battery includes a housing and the electrode core according to the second aspect. The housing is provided with an accommodating cavity. The electrode core is accommodated in the accommodating cavity.

According to a fourth aspect, the present disclosure provides an electric apparatus. The electric apparatus includes the battery according to the third aspect.

In the present disclosure, the first tab and the first end portion in the electrode plate are spaced apart by a preset distance, so that the electrode plate can be wound from the first end portion or from the second end portion according to a folding requirement, thereby reducing a possibility that wrinkling occurs when the electrode plate is folded or protruding deformation occurs at a corner formed by connection between the first tab and the foil body. The second tab is provided in the electrode plate, and the second tab is connected to a region in the foil body between the first end portion and the first tab, so that electrons can be directly transmitted to the region in the foil body between the first end portion and the first tab through the second tab, so as to shorten a transmission path of the electrons, thereby improving charging/discharging performance of a battery, reducing a battery polarization effect, and further reducing a possibility of lithium precipitation in a lithium battery.

### BRIEF DESCRIPTION OF DRAWINGS

To describe technical solutions in the embodiments or in the background of the present disclosure more clearly, the following describes the accompanying drawings that need to be used in the embodiments or the background of the present disclosure.
FIG. 1 is a plan view of an electrode plate according to an embodiment of the present disclosure;
FIG. 2 is a schematic diagram of a structure of a foil before an electrode plate is formed according to an embodiment of the present disclosure;
FIG. 3 is a cross-sectional view of the electrode plate taken along A-A in FIG. 1;
FIG. 4 is another cross-sectional view of the electrode plate taken along A-A in FIG. 1;
FIG. 5 is a plan view of an electrode plate according to another embodiment of the present disclosure;
FIG. 6 is a plan view of an electrode plate according to another embodiment of the present disclosure;
FIG. 7 is a plan view of an electrode plate according to another embodiment of the present disclosure;
FIG. 8 is a schematic diagram of a structure of an electrode core according to an embodiment of the present disclosure;
FIG. 9 is a schematic diagram of a structure of an electrode core according to another embodiment of the present disclosure;
FIG. 10 is a schematic diagram of a structure of an electrode core according to another embodiment of the present disclosure;
FIG. 11 is a schematic diagram of a structure of an electrode plate according to an embodiment of the present disclosure;
FIG. 12 is a schematic diagram of a structure of a battery according to an embodiment of the present disclosure; and
FIG. 13 is a schematic diagram of a structure of an electric apparatus according to an embodiment of the present disclosure.

### Descriptions of reference numerals:

10. Electrode plate; 10a. Positive electrode plate; 10b. Negative electrode plate; 100. Foil; 110. Foil body; 110a. First surface; 110b. Second surface; 111. First end portion; 112. Second end portion; 113. First empty foil region; 114. Second empty foil region; 120. First tab; 130. Empty foil region; 200. First dressing layer; 210. First notch; 300. Second dressing layer; 310. Second notch; 400. Second tab; 500. Dressing layer; 600. Axial line; 20. Electrode core; 30. Housing; 40. Battery; and 50. Electric apparatus.

### DESCRIPTION OF EMBODIMENTS

In order to make the objectives, technical solutions, and advantages of the present disclosure clearer, the following further describes the present disclosure in detail with reference to the accompanying drawings.

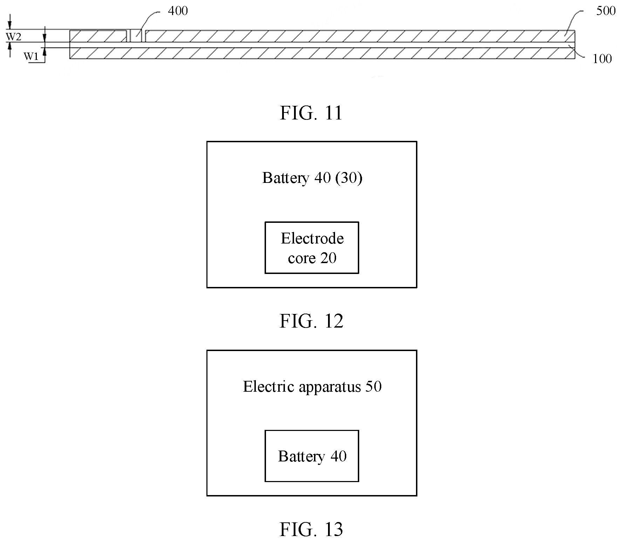

The present disclosure provides an electric apparatus. Referring to FIG. 13, an electric apparatus 50 includes a battery 40 and a load (not shown). The battery 40 is electrically connected to the load to provide electrical energy for the load.

Referring to FIG. 12, the battery 40 includes a housing 30 and an electrode core 20. The housing 30 has an accommodating cavity, and the electrode core is accommodated in the housing, and the accommodating cavity can accommodate an electrolytic solution. The battery may be but is not limited to a lithium battery, and the battery may be a cylindrical battery.

The electrode core 20 may include two electrode plates and a separator (not shown), where the two electrode plates are respectively a positive electrode plate 10a and a negative electrode plate 10b, and the positive electrode plate, the separator, and the negative electrode plate are sequentially stacked and wound to form an electrode core. The positive electrode plate, the separator, and the negative electrode plate form an axial center during winding. It will be understood that the positive electrode plate, the separator, and the negative electrode plate that are stacked are wound around the axial center to form an electrode core, and the axial center may be a central hole.

Structures of the positive electrode plate and the negative electrode plate may be the same or different.

For ease of description, a width direction of the electrode plate is defined as an X-axis direction, a length direction of the electrode plate is defined as a Y-axis direction, and a thickness direction of the electrode plate is defined as a Z-axis direction.

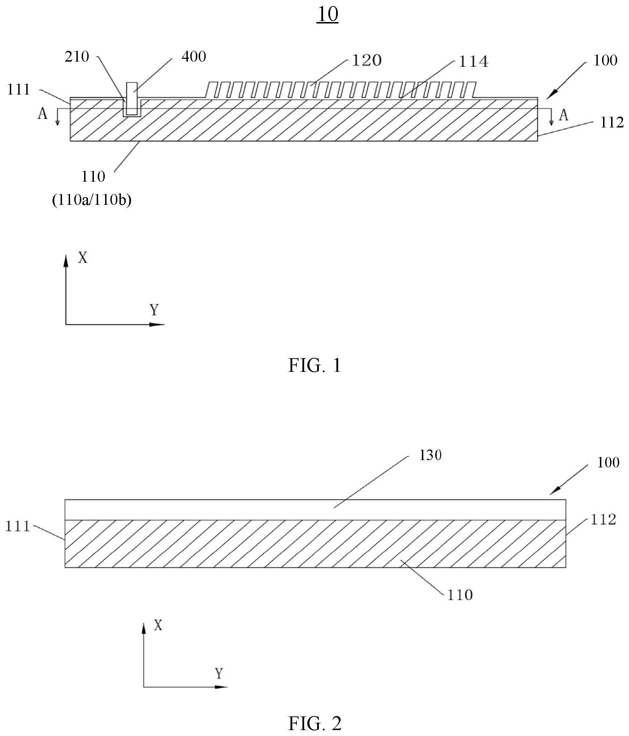

Referring to FIG. 1, the electrode plate 10 includes a foil 100 and a second tab 400. The foil 100 includes a foil body 110 and a first tab 120. The foil body 110 and the first tab 120 are interconnected in a first direction, and the first direction is the same as the X-axis direction. The foil body 110 includes a first end portion 111 and a second end portion 112 that are disposed opposite to each other in a second direction, and the second direction is the Y-axis direction. The first tab 120 and the first end portion 111 are spaced apart by a preset distance. When the two electrode plates and the separator are wound to form an electrode core, if the first end portion 111 of the electrode plate is first wound to form an axial center, the electrode core has space for the first tab 120 to bend toward a direction in which the axial center is located, so as to prevent the first tab 120 from covering the axial center. If the second end portion 112 of the electrode plate is first wound to form an axial center, the electrode core has space for the first tab 120 to bend toward a direction away from the axial center, so that the first tab 120 does not extend out of an outer wall of the electrode core, thereby avoiding increasing space occupied by the electrode core.

A dressing layer 500 is provided on at least one surface of the foil body 110 in the thickness direction of the electrode plate. If the electrode plate is a positive electrode plate, the dressing layer 500 coated on a surface of the foil body 110 includes a positive active substance. For example, the dressing layer 500 may be a slurry layer including lithium ions. If the electrode plate is a negative electrode plate, the dressing layer 500 coated on the surface of the foil body 110 includes a negative active substance. For example, the dressing layer 500 may be a slurry layer, a main ingredient of which is graphite.

In some embodiments, at least one surface of the foil body 110 in the thickness direction of the electrode plate includes a first surface 110a and a second surface 110b that are disposed opposite to each other, and the thickness direction of the foil body 110 is the Z-axis direction. A cross-section of the foil body 110 in the thickness direction is substantially rectangular. The dressing layer 500 includes a first dressing layer 200 and a second dressing layer 300, the first dressing layer 200 is coated on the first surface 110a, and the second dressing layer 300 is coated on the second surface 110b.

In the embodiments provided in the present disclosure, referring to FIG. 2, the foil 100 may be of an integrated structure. Specifically, the first dressing layer 200 is provided on a partial region of the first surface of the foil 100, and the second dressing layer 300 is provided on a partial region of the second surface of the foil 100, and an empty foil region 130 is retained near a side edge of the foil 100 in the X-axis direction. The first dressing layer 200 and the second dressing layer 300 are not provided in the empty foil region 130, and the empty foil region 130 is die-cut to form the first tab 120. Specifically, a partial region of the empty foil region 130 is cut off from a first end of the empty foil region 130 in the Y-axis direction by using a cutter, and the first tab 120 is retained, so that there is a specific distance between the first tab 120 and the first end portion 111 of the foil body 110. The foil body 110 is a portion of the foil 100 excluding the first tab 120. Before the foil 100 is die-cut to form the first tab 120, the first end portion 111 of the foil body 110 and the first end of the empty foil region 130 are at a same end of the foil 100.

A material of the foil 100 may be, but is not limited to, an aluminum material and a copper material. When the electrode plate is used as a positive electrode plate, the foil 100 in the electrode plate may be made of the aluminum material. When the electrode plate is used as a negative electrode plate, the foil 100 in the electrode plate may be made of the copper material.

The second tab 400 is disposed between the first end portion 111 and the first tab 120 and is connected to the foil body 110. A connection end of the second tab 400 is connected to the foil body 110, and a free end of the second tab 400 extends out of the foil body 110 in the first direction.

In the embodiments provided in the present disclosure, in the length direction of the electrode plate, the first tab 120 may be connected to a position of the foil body 110 close to the second end portion 112, or the first tab 120 may be connected to a region between the first end portion 111 and the second end portion 112 of the foil body 110.

The first tab 120 and the first end portion 111 in the electrode plate are spaced apart by a preset distance, so that the electrode plate can be wound from the first end portion 111 or from the second end portion 112 according to a folding requirement, thereby reducing a possibility that wrinkling occurs when the electrode plate is folded or protruding deformation occurs at a corner formed by connection between the first tab 120 and the foil body 110.

Because there is a specific distance between the first tab 120 and the first end portion 111 of the foil body 110, when the electrode plate is applied to the battery, there is a long transmission path for electrons to be transmitted from the first tab 120 to a region between the first end portion 111 of the foil body 110 and the first tab 120. In the embodiments provided in the present disclosure, the second tab 400 is connected to the region between the first end portion 111 in the foil body 110 and the first tab 120, so that electrons can be directly transmitted to the region in the foil body 110 between the first end portion 111 and the first tab 120 through the second tab 400, thereby shortening the transmission path of the electrons, reducing the battery polarization effect, and further reducing the possibility of lithium precipitation in a lithium battery.

In the present disclosure, referring to FIG. 11, a thickness of the first tab is W1, and a thickness of the second tab is W2, where 1 ≤ W2/W1 ≤ 15 (that is, a ratio of W2 to W1), and W1 and W2 have a same unit. The unit of W1 and W2 may be mm. Specifically, when the electrode plate is wound to form an electrode core, a free end of the first tab 120 and the free end of the second tab 400 can be formed at a same end of the electrode core, so that the first tab 120 and the second tab 400 are electrically connected to a current collector plate.

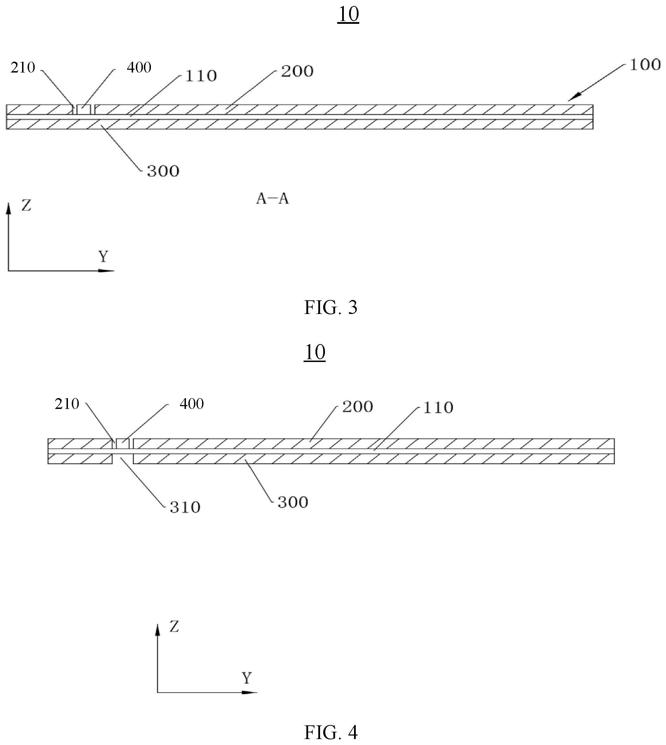

In a possible implementation, referring to FIG. 3, the second tab 400 and the foil 100 can be connected through welding, bonding, or the like. Specifically, a first notch 210 is provided in the first dressing layer 200, and the first notch 210 is in communication with the first surface, and the connection end of the second tab 400 is welded or bonded to the first surface. The free end of the second tab 400 protrudes beyond the first dressing layer 200, and the second tab 400 extends out of the foil body 110 in the X-axis direction from the connection end to the free end. In the X-axis direction and the Y-axis direction, a size of a portion of the second tab 400 in the first notch 210 is smaller than a size of the first notch 210, so as to prevent the first dressing layer 200 from interfering with a fixed connection between the second tab 400 and the foil 100.

When the connection end of the second tab 400 is connected to a bottom wall of the first notch 210 through welding or the like, welding easily deforms a region of the foil 100 in which the first notch 210 is located, which easily causes the second dressing layer 300 to crack, and further causes large-area damage to the second dressing layer 300. Referring to FIG. 4, to reduce damage to the second dressing layer 300 caused when the second tab 400 is welded, a second notch 310 is provided at a position of the second dressing layer 300 opposite to the first notch 210, and the second notch 310 is in communication with the second surface. Specifically, the first notch 210 and the second notch 310 may be symmetrical with respect to the foil 100.

An orthographic projection of a portion of the second tab that extends into the first notch on the foil body is located within an orthographic projection of the first notch on the foil body. In other words, an area of the orthographic projection of the portion of the second tab that extends into the first notch on the foil body is smaller than an area of the bottom wall of the first notch. Specifically, a cross-section of the first notch 210 in the Z-axis direction is greater than a cross-section of a portion of the second tab 400 that extends into the first notch 210 in the Z-axis direction. The portion of the second tab 400 that extends into the first notch 210 is not in contact with the first dressing layer 200. In this way, a possibility that the first dressing layer 200 is damaged when the second tab 400 is welded to the bottom wall of the first notch 210 can be reduced.

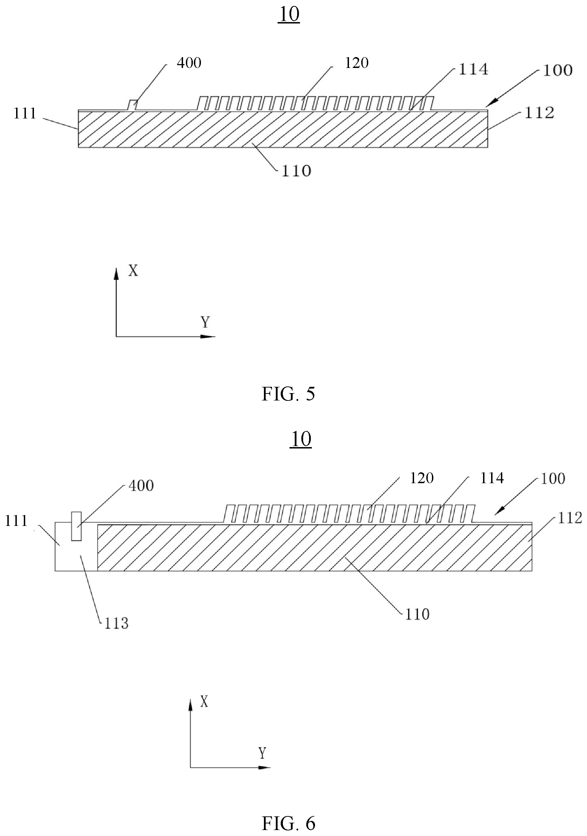

In a possible implementation, referring to FIG. 5, the second tab 400 may be integrally formed with the foil 100. Specifically, the second tab 400 is connected to a side edge of the foil body 110 in the first direction. When an electrode plate is manufactured, the first dressing layer 200 and the second dressing layer 300 are provided on the foil body 110, and an empty foil region 130 is retained near a side edge of the foil 100 in the X-axis direction. The first tab 120 is formed through die-cutting at a position spaced apart by a specific distance from the first end of the empty foil region 130, and the second tab 400 is formed through die-cutting between the first tab 120 of the empty foil region 130 and the first end of the empty foil region 130. By directly forming the second tab 400 through die-cutting in the empty foil region 130, a manufacturing process of the electrode plate is simplified and manufacturing costs of the electrode plate are reduced.

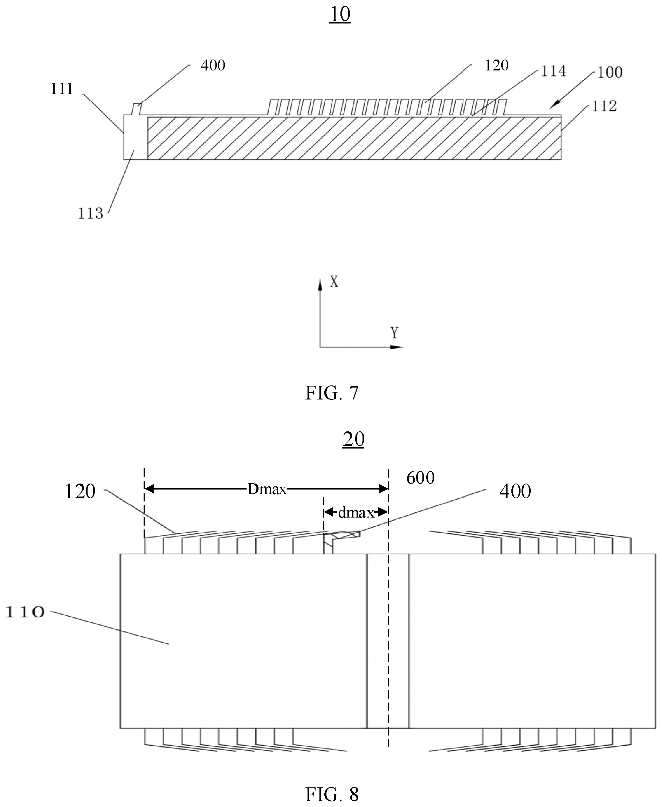

In a possible implementation, referring to FIG. 6 and FIG. 7, the foil body 110 has a first empty foil region 113. In the length direction of the electrode plate, the first empty foil region 113 is connected to a region covered by the dressing layer in the foil 100 and extends to the first end portion 111. The second tab 400 is connected to the first empty foil region 113.

Referring to FIG. 7, the second tab 400 is integrally formed with the foil 100, and the second tab 400 extends out of the foil body 110 from the foil body 110 in the first direction. Specifically, the first dressing layer 200 and the second dressing layer 300 are provided on the foil body 110, and an empty foil region 130 is retained near a side edge of the foil 100 in the X-axis direction. The first empty foil region 113 is provided on a side of the foil 100 in the Y-axis direction, the first tab 120 is formed through die-cutting at a position spaced apart by a specific distance from the first end of the empty foil region 130, and the second tab 400 is formed through die-cutting in the first empty foil region 113. By directly forming the second tab 400 through die-cutting in the first empty foil region 113, a manufacturing process of the electrode plate is simplified and manufacturing costs of the electrode plate are reduced.

Referring to FIG. 6, the second tab 400 may alternatively be formed separately from the foil 100. Specifically, the second tab 400 may be directly welded or bonded to the foil 100. In some embodiments, the connection end of the second tab 400 is welded to a surface of the first empty foil region 113, and the free end of the second tab 400 extends out of the foil body 110 in the X-axis direction.

The foil 100 may include a plurality of first tabs 120, and the plurality of first tabs 120 are spaced apart in the Y-axis direction, where the spacings may be formed through die-cutting.

In some embodiments, the foil body 110 further has a second empty foil region 114. The second empty foil region 114 is located on a side of the foil body 110 that is connected to the first tab 120 and the second tab 400, and is connected to the region covered by the dressing layer in the foil body 110. It will be understood that, in the X-axis direction, the second empty foil region 114 is located between the first tab 120 and the dressing layer. When the electrode plate is die-cut to form the first tab 120, damage to the dressing layer caused by the cutter cutting into the dressing layer can be avoided; and when the electrode plates and the separator are wound to form an electrode core, a bending arrangement of the first tab 120 still does not damage the dressing layer.

In the present disclosure, a size of the second empty foil region 114 in the first direction is 2 mm to 6 mm. When the electrode plate is being wound, the second empty foil region 114 can protect the dressing layer in the electrode plate, and arrangement of the second empty foil region 114 can further reduce loss of active material in the electrode plate, thereby avoiding reducing a battery capacity.

In the embodiments provided in the present disclosure, the first empty foil region 113 and the second empty foil region 114 in the foil body 110 are regions in the foil body 110 in which neither surface is coated with a dressing layer.

In a possible implementation, both the first tab 120 and the second tab 400 are disposed in a bent manner. A joint between the second tab 400 and the foil body 110 is closer to an axial line 600 of the electrode core than a joint between the first tab 120 and the foil body 110. The free end of the first tab 120 bends and extends toward a direction close to the axial line 600 of the electrode core, and the second tab 400 bends and extends toward a direction close to or away from the axial line 600 of the electrode core.

In a possible implementation, the free end of the first tab 120 bends and extends toward the direction close to the axial line 600 of the electrode core, and the second tab 400 bends and extends toward the direction close to the axial line 600 of the electrode core; the foil 100 includes a plurality of first tabs 120, a minimum distance from a joint between a first tab 120 closest to the axial line 600 of the electrode core in the plurality of first tabs 120 and the foil body 110 to the axial line 600 of the electrode core is 4 mm to 9 mm; and a minimum distance from a joint between the second tab 400 and the foil body 110 to the axial line 600 of the electrode core is 3 mm to 6 mm. In this way, a transmission path of electrons in the battery can be optimized, and electrochemical performance of the battery can be improved.

Referring to FIG. 8, when the separator and the two electrode plates are wound to form an electrode core, a portion of the electrode plate in which the second tab 400 is located is first wound, and a portion of the electrode plate in which the first tab 120 is located is later wound. The second tab 400 is closer to the axial line 600 of the electrode core than the first tab 120. It will be understood that the first tab 120 is located in an outer ring of a wound portion in the electrode core, and the second tab 400 is located in an inner ring of the wound portion in the electrode core. If the free end of the first tab 120 in the electrode plate can extend toward a direction of the axial line 600 of the electrode core, and the free end of the second tab 400 in the electrode plate extends toward the direction of the axial line 600 of the electrode core, and the free end of the first tab 120 and the free end of the second tab 400 are formed on the same plane, it is convenient for both the first tab 120 and the second tab 400 to be electrically connected to the current collector plate. Therefore, when the electrode core is applied to the battery, assembly difficulty of the battery can be reduced.

In a possible implementation, both the first tab 120 and the second tab 400 are disposed in a bent manner; and a joint between the first tab 120 and the foil body 110 is closer to the axial line 600 of the electrode core than a joint between the second tab 400 and the foil body 110. The free end of the first tab 120 bends and extends toward a direction away from the axial line 600 of the electrode core, and the second tab 400 bends and extends toward a direction away from the axial line 600 of the electrode core. The foil 100 includes a plurality of first tabs 120, and a maximum distance Dmax from a joint between a first tab 120 farthest away from the axial line 600 of the electrode core in the plurality of first tabs 120 and the foil body 110 to the axial line 600 of the electrode core is 37 mm to 42 mm; and a maximum distance dmax from a joint between the second tab 400 and the foil body 110 to the axial line 600 of the electrode core is 41 mm to 44 mm. In this way, a transmission path of electrons in the battery can be optimized, and electrochemical performance of the battery can be improved.

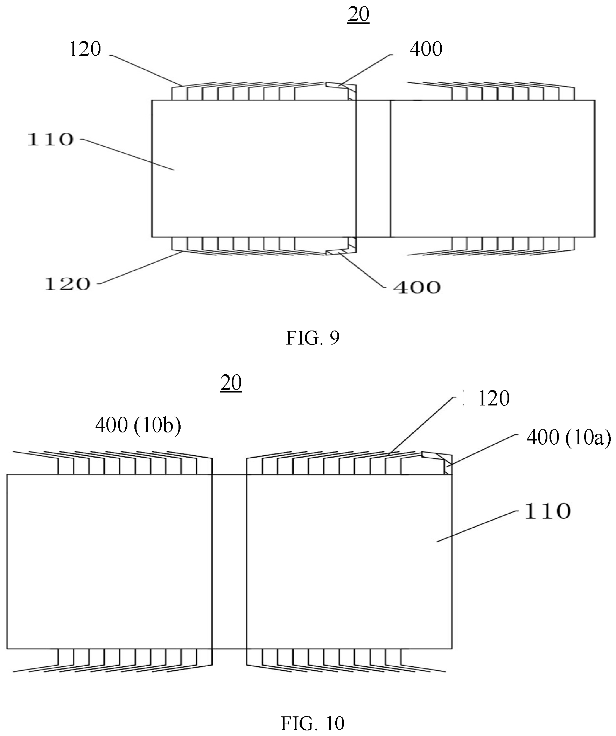

Referring to FIG. 9, if the free end of the first tab 120 in the electrode plate can extend toward a direction of the axial line 600 of the electrode core, and the free end of the second tab 400 in the electrode plate extends toward a direction away from the axial line 600 of the electrode core, the second tab 400 can be prevented from covering the axial line 600 of the electrode core. When the electrode core is applied to the battery, an electrolytic solution is conveniently injected into the axial line 600 of the electrode core, and both the first tab 120 and the second tab 400 can be easily electrically connected to the current collector plate, thereby reducing assembly difficulty of the battery.

In a possible implementation, when the separator and the two electrode plates are wound to form an electrode core, a portion of the electrode plate in which the first tab 120 is located is first wound, and a portion of the electrode plate in which the second tab 400 is located is later wound. The first tab 120 is closer to the axial line 600 of the electrode core than the second tab 400. It will be understood that the first tab 120 is located in an inner ring of a wound portion in the electrode core, and the second tab 400 is located in an outer ring of the wound portion in the electrode core. Referring to FIG. 10, the free end of the first tab 120 in the electrode plate can extend toward a direction away from the axial line 600 of the electrode core, and the free end of the second tab 400 in the electrode plate extends toward the direction of the axial line 600 of the electrode core, and the free end of the first tab 120 and the free end of the second tab 400 are formed on a same end face. In this way, it is convenient for both the first tab 120 and the second tab 400 to be electrically connected to the current collector plate. When the electrode core is applied to the battery, assembly difficulty of the battery is reduced. It should be noted that the two second tabs 400 in FIG. 10 respectively belong to a positive electrode plate and a negative electrode plate. It will be understood that, one of the two second tabs 400 in FIG. 10 is a positive tab, and the other is a negative tab.

A size of the second tab 400 extending out of the foil body 110 in the first direction is smaller than a size of the first tab 120 extending out of the foil body 110 in the first direction. When the positive electrode plate, the separator, and the negative electrode plate that are stacked are wound to form an electrode core, mutual interference between the first tab 120 and the second tab 400 can be avoided, thereby preventing the first tab 120 and the second tab 400 from bending.

In the embodiments provided in the present disclosure, in the electrode core, if the electrode plate is a positive electrode plate, the foil 100 of the electrode plate is an aluminum foil, and the second tab 400 in the electrode plate is also an aluminum material. If the electrode plate is a negative electrode plate, the foil 100 in the electrode plate is a copper foil, and the second tab 400 in the electrode plate is copper plated with nickel.

It will be noted that all directional indications (for example, up, down, left, right, front, and back) in the embodiments of the present disclosure are used merely to explain relative positional relationships, motion conditions, and the like between components in a specific posture (as shown in the accompanying drawings); and if the specific posture changes, the directional indications change accordingly.

In addition, descriptions of "first", "second", and the like involved in the present disclosure are used for a descriptive purpose only and will not be understood as indicating or implying relative importance thereof or implicitly indicating the quantity of the indicated technical features. Therefore, a feature defined with "first" or "second" may explicitly or implicitly include at least one of such features. In the description of the present disclosure, "a plurality of" means at least two, for example, two or three, unless otherwise clearly and specifically defined.

In the present disclosure, unless otherwise clearly specified and defined, terms such as "connection" and "fixation" will be understood in a broad sense. For example, the "connection" may be a fixed connection, a detachable connection, or an integrated connection; may be a mechanical connection or an electrical connection; may be a direct connection, an indirect connection through an intermediate medium, or an internal communication of two elements or an interaction relationship between two elements, unless otherwise clearly defined. A person of ordinary skill in the art may understand specific meanings of the foregoing terms in the present disclosure based on a specific case.

Furthermore, the technical solutions of the embodiments of the present disclosure can be combined with each other, but any combination should be on the basis that the combination can be implemented by a person of ordinary skill in the art. When a combination of the technical solutions is contradictory or cannot be implemented, it should be considered that such a combination of the technical solutions does not exist and is not within the protection scope claimed in the present disclosure.

The foregoing descriptions are merely specific implementations of the present disclosure, but the protection scope of the present disclosure is not limited thereto. Variations or replacements that can be easily conceived by any technician who is familiar with this technical field within the technical scope disclosed in the present disclosure should be included within the protection scope of the present disclosure. Therefore, the protection scope of the present disclosure shall be subject to the protection scope of the claims.

## Claims

1. An electrode plate (10), comprising:
a foil (100), wherein the foil comprises a foil body (110) and a first tab (120) connected to each other, and the first tab protrudes beyond a side edge of the foil body in a first direction; the foil body comprises a first end portion (111) and a second end portion (112) that are disposed opposite to each other in a second direction; the first tab and the first end portion are spaced apart by a preset distance; and a dressing layer (500) is provided on at least one surface of the foil body in a thickness direction of the electrode plate; and
a second tab (400), wherein the second tab is disposed between the first end portion and the first tab and is electrically connected to the foil body, and the second tab and the first tab protrude beyond a same side edge of the foil body.

2. The electrode plate according to claim 1, wherein a thickness of the first tab is W1, a thickness of the second tab is W2, 1 ≤ W2/W1 ≤ 15, and W1 and W2 have a same unit.

3. The electrode plate according to claim 1, wherein the foil body comprises a first surface (110a) and a second surface (110b) that are disposed opposite to each other in the thickness direction; and the dressing layer comprises a first dressing layer (200) and a second dressing layer (300), the first dressing layer is disposed on the first surface (110a), and the second dressing layer is disposed on the second surface (110b).

4. The electrode plate according to claim 3, wherein a first notch (210) is provided in the first dressing layer, and the first notch is in communication with the first surface; and
a connection end of the second tab extends into the first notch and is electrically connected to the first surface, and a free end of the second tab protrudes beyond the first dressing layer.

5. The electrode plate according to claim 4, wherein a second notch (310) in communication with the second surface is provided at a position of the second dressing layer opposite to the first notch.

6. The electrode plate according to claim 4, wherein an orthographic projection of a portion of the second tab that extends into the first notch on the foil body is located within an orthographic projection of the first notch on the foil body.

7. The electrode plate according to claim 1, wherein the foil body has a first empty foil region (113), the first empty foil region is connected to a region covered by the dressing layer in the foil body and extends to the first end portion, and the second tab is connected to the first empty foil region.

8. The electrode plate according to claim 1, wherein the second tab and the foil body are of an integrated structure.

9. The electrode plate according to claim 1, wherein the foil comprises a plurality of first tabs, and the plurality of first tabs are arranged at intervals in the second direction.

10. The electrode plate according to any one of claims 1 to 9, wherein in the first direction, a size of the second tab protruding beyond the foil body is smaller than a size of the first tab protruding beyond the foil body, and the first direction is perpendicular to the second direction.

11. The electrode plate according to claim 1, wherein the foil body further has a second empty foil region (114), the second empty foil region is located on a side of the foil body that is connected to the first tab and the second tab, and is connected to a region covered by the dressing layer in the foil body, and the second empty foil region extends from the first end portion to the second end portion.

12. The electrode plate according to claim 11, wherein a size of the second empty foil region in the first direction is 2 mm to 6 mm.

13. The electrode plate according to claim 1, wherein the electrode plate is embodied as at least one of a positive electrode plate and a negative electrode plate of a battery (40).

14. An electrode core (20), comprising:
a positive electrode plate (10a) and a negative electrode plate (10b), wherein at least one of the positive electrode plate and the negative electrode plate is the wound electrode plate according to any one of claims 1 to 13.

15. The electrode core according to claim 14, wherein both the first tab and the second tab are disposed in a bent manner; and a joint between the second tab and the foil body is closer to an axial line (600) of the electrode core than a joint between the first tab and the foil body; and
a free end of the first tab bends and extends toward a direction close to the axial line of the electrode core, and the second tab bends and extends toward a direction close to or away from the axial line of the electrode core.

16. The electrode core according to claim 15, wherein the foil comprises a plurality of first tabs, the free end of the first tab bends and extends toward the direction close to the axial line of the electrode core, and a minimum distance from a joint between a first tab closest to the axial line of the electrode core in the plurality of first tabs and the foil body to the axial line of the electrode core is 4 mm to 9 mm; and
the second tab bends and extends toward the direction close to the axial line of the electrode core, and a minimum distance from a joint between the second tab and the foil body to the axial line of the electrode core is 3 mm to 6 mm.

17. The electrode core according to claim 14, wherein both the first tab and the second tab are disposed in a bent manner; and a joint between the first tab and the foil body is closer to an axial line of the electrode core than a joint between the second tab and the foil body; and
a free end of the first tab bends and extends toward a direction away from the axial line of the electrode core, and the second tab bends and extends toward a direction close to or away from the axial line of the electrode core.

18. The electrode core according to claim 17, wherein the foil comprises a plurality of first tabs, the free end of the first tab bends and extends toward the direction away from the axial line of the electrode core, and a maximum distance (Dmax) from a joint between a first tab farthest away from the axial line of the electrode core in the plurality of first tabs and the foil body to the axial line of the electrode core is 37 mm to 42 mm; and
the second tab bends and extends toward the direction away from the axial line of the electrode core, and a maximum distance (dmax) from a joint between the second tab and the foil body to the axial line of the electrode core is 41 mm to 44 mm.

19. A battery (40), comprising:
a housing (30), provided with an accommodating cavity; and
the electrode core (20) according to any one of claims 14 to 18, wherein the electrode core is accommodated in the accommodating cavity.

20. An electric apparatus (50), wherein the electric apparatus comprises the battery (40) according to claim 19.
